# EUROPEAN PATENT APPLICATION

(11) **EP 4 465 383 A1**
(43) Date of publication of application: **20.11.2024**
(21) Application number: 24175909.1
(22) Date of filing: 15.05.2024
(51) Int. Cl.: H01M 4/36, H01M 4/131, H01M 4/1391, H01M 4/525, H01M 10/0525, H01M 4/02

(54) **DOUBLE COATED CATHODE AND METHODS FOR FORMING THE SAME**

(30) Priority: 16.05.2023 SE 2350594
(71) Applicant: Northvolt AB, 112 47 Stockholm (SE)
(72) Inventor: Jang, Hwamyung, 723 58 Västerås (SE); Sánchez Moreno, Lorena María, 722 13 Västerås (SE)
(74) Representative: Engman, Eva Jessica

(57) **Abstract**

The present disclosure relates to a coated cathode for a lithium ion cell comprising a first coating layer and a second coating layer, with both layers being applied by atomic layer deposition. The first coating layer provides improved conductivity, while the second coating layer provides improved stability. Methods of forming the coated cathode by sequential atomic layer deposition are also disclosed.

## Description

### FIELD OF INVENTION

The present description relates to ALD-coated cathodes for lithium-ion cells.

### BACKGROUND OF THE INVENTION

Rechargeable or 'secondary' batteries find widespread use as electrical power supplies and energy storage systems. For example, in automobiles, battery packs formed of a plurality of battery modules, wherein each battery module includes a plurality of electrochemical cells, are provided as a means of effective storage and utilization of electric power.

Secondary cells such a lithium-ion cells comprise a positive active material, or "cathode active material", and a negative active material or "anode active material" that form the electrochemically active components of the cathode and anode respectively.

Exemplary cathode active materials (CAM) include the layered lithium metal oxide (LiMOz) cathode materials, preferably wherein the metal is nickel. For example, cathode active materials such as lithium nickel manganese cobalt oxide (NMC) is a possible cathode active material for high-energy Li-ion batteries.

To increase the energy density and improve the rate performance at a low cost, often high nickel lithium nickel manganese cobalt oxide (high Ni NMC) materials are used.

However, the use of high Ni NMC materials poses some problems including decreased stability, as well as a lowering of cycling performance. The stability decrease is mainly caused by dissolution of transition metals, surface cracking or evolution of gas during charging/discharging.

Often the CAM is further functionalised to improve different properties. For example, coatings are applied to protect the surface of the CAM during charging cycles, particularly the initial charging cycles as the surface electrode interface (SEI) is being formed. However, these coatings may form an inactive phase on the surface of the active cathode materials which may impede the overall performance.

Alternatively, coatings to improve the electrical properties may be applied. However, these coatings tend to suffer from low stability due to reaction with the electrolyte.

Therefore, there is an interest in improving the properties of high Ni NMC materials by coating techniques, which increase stability and the electric properties simultaneously.

This disclosure relates to a cathode comprising high Ni NMC and two layers of coating, and a method of forming the coated cathode active material and/or cathode.

### BRIEF DESCRIPTION OF THE INVENTION

According to an aspect of the present disclosure, there is provided a coated cathode comprising
a cathode layer comprising cathode active material;
a first coating layer, and
a second coating layer,
wherein
the first coating layer comprises a conductive metal oxide and is at least partially disposed on the cathode active material, and
the second coating layer comprises a passivating metal oxide and is disposed on at least a portion of the cathode layer and is in contact with at least a portion of the first coating layer.

According to a second aspect of the present disclosure, there is provided a method of forming a coated cathode comprising the steps of:
1) providing a cathode layer comprising a cathode active material and a first coating layer, wherein the first coating layer comprises a conductive metal oxide and is at least partially disposed on the cathode active material; and
2) depositing a passivating metal oxide on the cathode layer to form a second coating layer by atomic layer deposition, the second coating layer being disposed on at least a portion of the cathode layer so as to be in contact with at least a portion of the first coating layer.

According to a third aspect of the present disclosure, there is provided a coated cathode obtained by the above-mentioned method.

While the disclosure is amenable to various modifications and alternative forms, specifics thereof have been shown by way of example and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description.

### BRIEF DESCRIPTION OF THE FIGURES

Figures 1a/1b schematically show the various forms of the coated cathode of the disclosure.
Figures 2a/2b schematically show the various forms of the coated cathode of the disclosure, wherein the coating layers are penetrating into the internal openings of the electrode.

In the drawings, the sizes and relative thicknesses of layers and regions may be exaggerated, and the same reference numerals denote the same elements throughout the present invention.

The present invention will in the following be described in more detail.

### DETAILED DESCRIPTION OF THE INVENTION

The disclosure relates to a coated cathode, where atomic layer deposition (ALD) is used to provide a total of two layers of coating which are disposed on the cathode layer, the cathode active material or a combination thereof. The obtained double coated material benefits from the properties of both coatings to obtain an improved cathode.

Alternatively, this can be described as a coated cathode which comprises cathode active material, and two layers of coating which are applied using atomic layer deposition (ALD), wherein the first coating layer may be applied on either the cathode active material or the cathode layer, while the second coating layer is applied on the cathode layer.

The disclosure further relates to the method of producing said coated cathode.

Importantly, the addition of two layers allows for fine tuning the properties of the cathode, since different coatings can provide different properties. For example, one layer may increase the conductive properties, while a second layer may increase the stability. Furthermore, the two layers may impact each other to provide additional positive effects.

In the context of the disclosure, "conductive" refers to the conduction of electrons and/or ions.

### CATHODE ACTIVE MATERIAL

In the context of the disclosure "cathode active material" (CAM) refers to any material that is suitable for use as the electrochemically active material in a cathode (positive electrode), and suitable for use in a cell. The role of the CAM is to reversibly intercalate ions (such as lithium ions) during cell charge and discharge cycles.

The cathode active material of the disclosure is an intercalation material, wherein the intercalation metal is lithium.

Preferably, the cathode active material is a transition metal complex such as layered lithium metal oxide (LiMOz) cathode materials, wherein the metal is typically nickel. Even more preferably, the cathode active material is a lithium nickel manganese cobalt oxide (NMC), such as a high nickel lithium nickel manganese cobalt oxide (high Ni NMC).

In some embodiments, the cathode active material comprises lithium nickel cobalt manganese oxides (NMC) (Li_{b}Ni_{1-x-y}CoₓMn_{y}A_{z}O₂ (0<x+y<1)), where A is an element other than Li, Ni, Co, Mn or O and wherein 0≤z≤0.05, preferably 0<z≤0.03, and wherein 0.9≤b≤1.1.

In preferred embodiments, the NMC cathode materials are high in nickel. As such, the cathode active material typically comprises lithium nickel cobalt manganese oxides (NMC) represented by the formula Li_{b}Ni_{1-x-y}CoₓMn_{y}A_{z}O₂, wherein 0<x+y<0.4, preferably 0<x+y<0.25, and wherein 0≤z≤0.05, preferably 0<z≤0.03, and wherein 0.9≤b≤1.1.

The ratio of the nickel of the high-nickel NMC material may range from 33 mol% to 98 mol %. Preferably, the ratio may range from 60 mol% to 95 mol%. Even more preferably, the ratio may range from 80 mol% to 95 mol%.

In preferred embodiments, the NMC cathode materials is defined as Li_{b}Ni_{1-x-y}CoₓMn_{y}A_{z}O₂, wherein 0<x+y<0.4, preferably 0<x+y<0.25, and wherein 0≤z≤0.05, preferably 0.002≤z≤0.03, and wherein 0.9≤b≤1.1.A is one or more chosen from the group Al, B, Zr, Ba, Ca, Ti, Mg, Ta, Nb, V, Fe, Ru, Re, Pt and Mo.

### ELECTRODE (CATHODE)

To produce an electrode, a cathode active material, a binder and optionally a conductive additive are typically dispersed in an electrode dispersant to form a slurry. The slurry is then deposited on a current collector to form the electrode.

In the context of this disclosure, this deposited composite may be referred to as the cathode layer. The "cathode layer" therefore refers to a composite comprising particles of cathode active material together with binder and optionally a conductive additive.

The binder adhesively connects all the electrode materials for long-term charge/discharge cycling. The role of the optional conductive additive is to improve the electronic properties of the cathode and to provide an electrical connection between the particles of cathode active material in the cathode.

Suitable binders are well known in the art and may be water-insoluble or water-soluble.

Examples of suitable water-insoluble binders include polyvinyl chloride, carboxylated polyvinyl chloride, polyvinyl fluoride, an ethylene oxide-containing polymer, an ethylene propylene copolymer, polystyrene, polyvinylpyrrolidone, polyurethane, polytetrafluoro ethylene, polyvinylidene fluoride, polyethylene, polypropylene, polyamideimide, polyimide, or a combination thereof.

Examples of suitable water-soluble binders include a rubber binder or a polymer resin binder. The rubber binder may be selected from a styrene-butadiene rubber, an acrylated styrene-butadiene rubber, an acrylonitrile-butadiene rubber, an acrylic rubber, a butyl rubber, a fluororubber, and a combination thereof. The polymer resin binder may be selected from polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and a combination thereof.

The cathode may comprise, by weight, 0.01-10 wt% binder, for example from about 0.02-8 wt%, from about 0.05-6 wt%, or from about 0.06-4 wt% binder. Preferably the cathode comprises from about 0.1 to 3 wt% binder, even more preferably 0.2 wt% to 2 wt% binder, such as from 0.5 wt% to 1.5 wt% binder. Most preferably the cathode comprises about 1 wt% binder.

Suitable conductive additives include acetylene black, carbon black, graphene, graphite, mesocarbon microbead (MCMB), pitch-based carbon, coke powders, carbon nanotubes or metallic powders. These conductive additives may be used alone or in combination.

Preferred conductive additives are selected from carbon black, graphite, carbon nanotubes, or mixtures thereof.

In an embodiment, the cathode may comprise 0.01-10 wt% conductive additive, for example from about 0.02-8 wt%, from about 0.05-6 wt%, or from about 0.06-4 wt% conductive additive. Preferably the cathode comprises from about 0.1 to 3 wt% conductive additive, even more preferably 0.2 wt% to 2 wt% conductive additive, such as from 0.5 wt% to 1.5 wt% conductive additive. Most preferably the cathode comprises about 1 wt% conductive additive.

In the electrode, the cathode active material is typically present in an amount of, by weight, from about 60-99.9 wt% active material, for example from about 70-99.9 wt%, from about 80-99.9 wt%, from about 90-99.9 wt%, or from about 95-99.9 wt% active material. Preferably the active layer comprises from about 96-99.9 wt% active material, even more preferably the active layer comprises about 98 wt% active material.

The electrode (cathode) is typically formed by forming a slurry of cathode active material, binder and optional conductive agent; and depositing the slurry on a current collector. Any suitable dispersing medium may be used for the slurry.

### COATINGS

The cathode of the disclosure comprises a cathode layer comprising cathode active material; a first coating layer, and a second coating layer.

In the context of the disclosure, "coating" or "coated" refers to a substrate wherein the substrate surface comprises an added layer of metal oxide.

The coatings of this disclosure are typically amorphous.

To achieve thin and uniform layers, atomic layer deposition (ALD) is used for the coating process.

ALD is based on sequential deposition of monolayers on a surface using a gas-phase chemical process. The surface on which the film is to be deposited is sequentially exposed to different precursors followed by purging of the growth reactor to remove any residual chemically active source gas or by products. When the growth surface is exposed to a precursor, it gets completely saturated by a monolayer of that precursor. The thickness of a monolayer depends on the reactivity of that precursor with the growth surface. This results in a number of advantages such as excellent uniformity, and easy and accurate film thickness control.

Generally, between 1 and 5 cycles of ALD, for example 1 to 3, are used for each of the first and second coating layers. Preferably, 1 to 2 cycles of ALD are used for each of the first and second coating layers.

It is found that thin layers provide better properties.

In the context of the disclosure, "thin" with respect to a coated layer refers to a surface coating (a layer) which may be about 3 nanometers or less, for instance about 2.5 nanometers or less, preferably about 2 nanometers or less.

Additionally, the thickness of the coating (the layer) may be about 0.1 nanometers or more, such as about 0.2 nanometers or more.

Typically, the first coating layer is therefore from about 0.1 to 2 nm, preferably from about 0.2 to 1.5 nm.

Likewise, the second coating layer is typically from about 0.1 to 2 nm, preferably from about 0.2 to 1.5 nm.

To measure the depth of the coating layers, different methods can be applied.

An exemplary method includes depth profiling. Depth profiling is a method based on the sequential surface analysis and surface etching.

Various methods can be used for the surface analysis. Exemplary analysis methods include X-ray photoelectron spectroscopy (XPS); Auger electron spectroscopy (AES) and secondary ion mass spectrometry (SIMS). XPS is the preferred method of surface analysis.

The surface etching is generally performed using an ionic beam, preferably an argon ion beam. Generally, an ion gun is used to produce said ion beam and direct the beam towards the surface. By bombarding the surface with an ion beam, a small layer will be removed, which allows for analysis of different layers of sample.

The sequential surface analysis and surface etching allows for analysis of different layers within the sample to reveal a depth profile of the sample. The depth profile shows the composition of different elements at different depths, which can be converted into thicknesses of each layer.

Thus, the method of forming the coated cathode of the disclosure comprises the steps of:
1) providing a cathode layer comprising a cathode active material and a first coating layer, wherein the first coating layer comprises a conductive metal oxide and is at least partially disposed on the cathode active material; and
2) depositing a passivating metal oxide on the cathode layer to form a second coating layer by atomic layer deposition, the second coating layer being disposed on at least a portion of the cathode layer so as to be in contact with at least a portion of the first coating layer.

In the context of this disclosure, "disposed on" refers to the product formed by depositing (or coating) one material over another. Depositing one material over another may or may not involve direct contact between the disposed material and the material upon which the disposed material is deposited. For example, typically, the first coating layer is in contact with a least of portion of the cathode active material. On the contrary, the second coating layer will typically not be in contact with the cathode active material in the layer upon which the second coating layer is at least partly disposed. Essentially since the cathode active material has been covered by the first coating layer, such that further materials disposed thereon no longer come into direct contact with the cathode active material. Instead, the second coating will be in contact with at least a portion of the first coating layer.

In the context of the disclosure, the cathode layer corresponds to a composite comprising particles of cathode active material together with binder and optionally a conductive additive. The first coating layer may be disposed on the cathode layer (and thereby in contact with the cathode active material in the layer), or alternatively disposed on the cathode active materials prior to incorporating them into the cathode layer. The second coating layer may be disposed on the cathode layer, and as such the second coating layer ends up in contact with the first coating layer.

Thus, step 1) of the method may comprise the steps of:
a) providing a cathode layer comprising a cathode active material; and
b) depositing a conductive metal oxide on the cathode layer to form a first coating layer by atomic layer deposition.

Alternatively, or as a precursor to step a), step 1) of the method of the disclosure may comprise the steps of:
i) providing a cathode active material in the form of discrete particles;
ii) depositing a conductive metal oxide on the cathode active material to form a first coating layer by atomic layer deposition, wherein the depositing forms a coated cathode active material comprising a core of cathode active material and a shell of first coating layer; and
iii) forming a cathode layer from said coated cathode active material.

Thus, the first coating layer may be in the form of a shell disposed on the cathode active material, such that the cathode active material is in the form of particles comprising a core of cathode active material and a shell of first coating layer. Such core/shell particles may be used to form the cathode layer, upon which the second coating layer is deposited by ALD.

Typically, the shell is at least partially covering the core. For example, the core/shell particles comprise a core which is at least 95% coated by the shell, preferably at least 98% coated by the shell, even at least 99% coated by the shell.

In a preferred embodiment, the first coating layer is in a form of a shell disposed on the CAM, while the second coating layer is disposed on a cathode layer formed using the CAM having a shell of first coating.

Alternatively, the cathode layer may comprise particles of cathode active material, and the first and second coating layers are deposited sequentially on the cathode layer. Cathodes formed in this way comprise a first coating layer disposed on the cathode layer, and a second coating layer disposed on at least a portion of the cathode layer and is in contact with at least a portion of the first coating layer; typically the second cathode layer is disposed on the first coating layer.

Finally, core/shell coated cathode active material having a first coating layer disposed thereon may be used to form a cathode layer, upon which a further layer of first coating layer is deposited by ALD followed by a second coating layer.

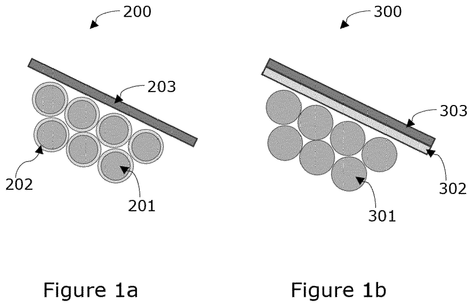

The cathodes formed by these methods are schematically shown in the figures. In Figure 1a, the cathode 200 is shown as comprising particles of cathode active material 201 having a first coating layer 202. The cathode active material is therefore in the form of core/shell particles, with the shell comprising the first coating layer applied to the cathode active material by ALD. These coated particles are formed into a layer which may contain binder and conductive additive (not shown). The second coating layer 203 is then applied to the cathode layer to form the coated cathode of the disclosure 200.

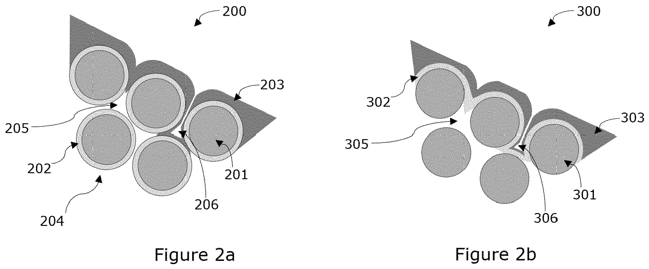

In Figure 2b, an alternative construction of the electrode 300 is shown, in which the cathode active material 301 is formed into a cathode layer with optional binder and conductive material (not shown). This cathode layer is then sequentially coated with a first coating layer 302 and a second coating layer 303, both applied by ALD.

The cathode active material is particulate, and as such the cathode layer contains internal openings between the discrete particles. This is even the case when binder is used, as typically the binder is only present in small amounts relative to the cathode active material. As such, the binder does not form a discrete matrix which fully encapsulates the cathode active material. Rather, a tortuous path of internal openings exists within the cathode layer. The internal openings within the cathode layer allow electrolyte to penetrate into the cathode, facilitating transport of lithium ions into and out of the cathode during operation of the cell.

Typically, the cathode will have a porosity of from 10% to 40% by volume, such as from 20% to 30% by volume.

These openings are shown schematically in Figures 2a and 2b. In Figure 2a, the openings 205 exist between the discrete particles 204 of cathode active material 201 having a first coating 202. The second coating layer 203 is applied by ALD to the surface of the cathode, forming a thin layer over the surface that matches the surface profile. Additionally, the second coating layer is able to penetrate into the cathode openings 205 to form a coated opening 206 inside the cathode 200.

The coating is able to penetrate within the cathode layer as the ALD process deposits a coating in gaseous form. The gas phase material permeates into the internal openings through the tortuous paths from the surface into the cathode layer.

Thus, at least a portion of said internal openings along said tortuous path comprises a portion of the first coating layer in contact with the cathode active material and the second coating layer disposed on and in contact with said portion of first coating layer.

As the second coating layer is formed over the cathode layer, it is disposed on at least a portion of the cathode layer (i.e. the composite structure formed from the cathode active material comprising the first coating layer). The second coating layer may also be formed on components in the cathode layer other than the cathode active material comprising the first coating layer, such as the binder and conductive material. However, as the relative amounts of binder and conductive material are low compared to cathode active material, the second coating layer forms on at least a portion of the first coating layer which is disposed on the cathode active material.

Thus, it is possible to determine when a coating layer is "deposited on the cathode layer" in the context of the disclosure, as the relevant coating will be formed over a portion of the exposed surface of the cathode to provide a relatively uniform, thin, continuous layer which coats the underlying composite that may comprise a variety of materials (such as cathode active material, binder, and conductive agent).

This is also shown in Figure 2b, in which the internal opening 305 may comprise a first coating layer and second coating layer in a coated internal opening 306. The dual layer coating is formed by sequential atomic layer deposition of the first coating layer and the second coating layer, with each deposition process involving penetration of the gaseous material into the electrode to form the coating layer within the internal openings of the electrode.

As the pores provide various benefits due to the increase of surface area and facilitation of ion transport during charge discharge, preferably a thin coating is applied to avoid completely filling and blocking the pores.

The combination of first and second coating layer provides a number of advantages.

The first coating layer is at least partially disposed on the cathode active material and comprises a conductive metal oxide. This coating layer facilitates electron transfer to and from the cathode active material, as well as transfer of lithium ions. This ensures that the conductive properties of the cathode will be improved to yield improved rate performance and cycling performance.

Suitable conductive metal oxides for use in the first coating layer are selected from the group consisting of cerium oxides (CeOz, Ce₂O₃, Ce₃O₄), niobium oxides (NbOz, NbO, Nb₂O₅), and ruthenium oxides (RuOz, RuO₄).

Thus, preferably the first coating layer comprises a metal oxide selected from the group consisting of CeO₂, Ce₂O₃, Ce₃O₄, NbO₂, NbO, and Nb₂O₅.

Preferably, the first coating layer comprises a metal oxide selected from the group consisting of niobium oxides such as NbO₂, NbO, and Nb₂O₅.

A potential issue with conductive metal oxides is that they may have poor stability during use. For instance, surface cracking may occur after repeated charge and discharge cycling. Additionally, gas evolution may be an issue. The high conductivity and ion transport capability can also lead to leaching of transition metal ions from the cathode active material into the electrolyte, reducing performance and capacity of the cell. These issues are particularly acute where the conductive metal oxide is in contact with the electrolyte during use of the cell.

To mitigate these issues, the second coating layer comprises a passivating metal oxide and is disposed on at least a portion of the cathode layer and is in contact with at least a portion of the first coating layer. This prevents direct contact of the first coating layer with the electrolyte, mitigating the amount of gas evolution during use. The second coating layer also stabilises the conductive metal oxide, reducing the amount of cracking that occurs.

Suitable passivating metal oxides for use in the second coating layer are selected from the group consisting of alumina (aluminium oxide, Al₂O₃), zinc oxide (ZnO), magnesium oxide (MgO), titanium dioxide (TiOz), silicon oxide (SiOz), and zirconia (zirconium dioxide, ZrOz). Aluminium oxide (Al₂O₃), titanium dioxide (TiOz), and zinc oxide (ZnO) are preferred, with aluminium oxide (Al₂O₃) and titanium dioxide (TiO₂) being more preferred, and aluminium oxide (Al₂O₃) being particularly preferred.

The passivating metal oxide functions by preventing the direct contact between the conductive metal oxide and the electrolyte, which suppresses the transition metal dissolution and inhibits side reactions between the cathode active material or conductive metal oxide and the electrolyte. Therefore, the coating increases the stability of the cell. As the coating protects against unwanted reactions, it may also be called a protective coating.

Surprisingly, the combination of the first coating layer and second coating layer significantly reduces the amount of leaching of transition metals from the cathode active material during use, while still allowing transport of lithium ions.

In a preferred embodiment, the first coating layer comprises a niobium oxide (NbO₂, NbO, and/or NbzOs), and the second coating layer comprises aluminium oxide (Al₂O₃).

In a further preferred embodiment, the first coating layer comprises a niobium oxide (NbO₂, NbO, and/or NbzOs), and the second coating layer comprises titanium dioxide (TiO₂).

In a preferred embodiment, the first coating layer comprises a cerium oxide (CeO₂, Ce₂O₃, and/or Ce₃O₄), and the second coating layer comprises aluminium oxide (Al₂O₃).

In a further preferred embodiment, the first coating layer comprises a cerium oxide (CeO₂, CezOs, and/or Ce₃O₄), and the second coating layer comprises titanium dioxide (TiO₂).

Without wishing to be bound by theory, it is thought that different structures in the conductive metal oxide and passivating metal oxide have differing ion transport capabilities which in part are dependent on the size of the relevant metal ions. Thus, ions of different sizes will have different flux rates through the conductive and passivating metal oxides for a given electromotive force (or applied voltage). The metal oxides are therefore in effect acting as size differentiating sieves which selectively allow transport of metal ions of a certain size in preference to others. The combination of conductive metal oxide and passivating metal oxide, as well as the composite metal oxide formed at the interface of these two layers, essentially acts as a size selective matrix that preferentially allows transport of lithium in favour of transition metal ions in the cathode active material.

Moreover, the combination of first and second coating layers provides a significant reduction in the amount of transition metal ion leaching as compared to either layer alone, particularly due to the composite metal oxide formed at the interface of these two layers.

Moreover, the first layer is disposed at least in part on the cathode active material and as such is closer to the cathode active material than the second layer. This ensures the advantages of the conductive layer are retained, while the issues associated with contact of the conductive layer with the electrolyte are mitigated. By protecting the conductive coating, a smaller amount of conductive metal oxide may be necessary to arrive at good electronic properties. Using a small amount is highly desirable, since conductive metal oxides are often expensive materials.

Overall, the combination of the two layers may result in a variety of benefits including: stabilizing the cathode, particularly electrode/electrolyte interfaces; preventing side reactions between cathode active material and the electrolyte; preventing transition metal dissolution; increasing the conductivity and wettability; and improving rate and cycling performance.

The reduction of transition metal dissolution, specifically, prevents the formation of surface cracks and the evolution of gas during charging/discharging. Further, this results in decreased capacity fading, leading to a cell with improved lifetime.

### CELLS

The present disclosure also relates to cells comprising the coated cathode of the disclosure. Such cells typically additionally comprise an anode, a separator disposed between the anode and cathode, said coated cathode, anode and separator forming an electrode assembly, the cell further comprising a housing for the electrode assembly. The cell will typically comprise an electrolyte to facilitate the transport of lithium ions between the cathode and anode. The housing is typically sealed to ensure the electrolyte is retained within the housing. Said housing usually includes terminals in electrical contact with the anode and cathode.

These cells may be combined to form a battery (i.e. an array of cells).

The disclosure also relates to an electrical device comprising a cell of the disclosure. Unless otherwise indicated, all technical and scientific terms used herein have the same meaning as commonly understood by one of ordinary skill in the art to which this invention pertains.

### EXAMPLE

A coin half-cell (14 mm diameter) was prepared using the cathode described herein. The cathode comprises cathode active material having a core of NMC which is coated with NbOₓ (first coating layer), while the entire the entire cathode active layer is coated with Al₂O₃ (second coating layer). This is in line with the embodiment shown in Figure 1a.

The anode used in the coin half-cell was lithium metal. A ceramic-coated separator was used to separate the anode and cathode. Stainless steel was used for the positive and negative casing elements of the cell.

This resulted in the formation of an electrode having a loading level of 10 mg/cm², and an electrode density of 3.2 mg/cm³.

The coin half-cell prepared using the cathode of the disclosure was compared to coin half-cells comprising cathodes having only one or no coating layers.

It was found that the combination of NbOₓ CAM coating (first coating layer) and Al₂O₃ cathode active layer coating (second coating layer) improved the electronic conductivity, while still maintaining the stability during long-term-cycling compared to a cathode having only one coating layer or no coating at all.

Additionally, long-term cycling experiments showed that the double coated cathode maintained the capacity retention over cycling at higher capacities compared to materials having only one layer of coating. The same effect was observed on impedance growth over cycling. Similarly, the retention was improved as a result of the dual layer coatings.

In conclusion, it was found that the combination of NbOₓ as a first coating layer and Al₂O₃ as a second coating layer improves a variety of performance parameters, including stabilisation of the cathode, increasing the conductivity, and improving rate and cycling performance.

All embodiments of the invention and particular features mentioned herein may be taken in isolation or in combination with any other embodiments and/or particular features mentioned herein (hence describing more particular embodiments and particular features as disclosed herein) without departing from the disclosure of the invention.

As used herein, the term "comprises" will take its usual meaning in the art, namely indicating that the component includes but is not limited to the relevant features (i.e. including, among other things). As such, the term "comprises" will include references to the component consisting essentially of the relevant substance(s).

Wherever the word 'about' is employed herein in the context of amounts, for example absolute amounts, weights, volumes, sizes, diameters etc., or relative amounts (e.g. percentages) of individual constituents in a composition or a component of a composition (including concentrations and ratios), timeframes, and parameters such as temperatures etc., it will be appreciated that such variables are approximate and as such may vary by ±10%, for example ±5% and preferably ±2% (e.g. ±1%) from the actual numbers specified herein. This is the case even if such numbers are presented as percentages in the first place (for example 'about 10%' may mean ±10% about the number 10, which is anything between 9% and 11%).

## Claims

1. A coated cathode comprising
a cathode layer comprising cathode active material;
a first coating layer, and
a second coating layer,
wherein
the first coating layer comprises a conductive metal oxide and is at least partially disposed on the cathode active material, and
the second coating layer comprises a passivating metal oxide and is disposed on at least a portion of the cathode layer and is in contact with at least a portion of the first coating layer.

2. The coated cathode of claim 1, wherein cathode active material is in the form of particles comprising a core of cathode active material and a shell of first coating layer, wherein the shell is at least partially covering the core.

3. The coated cathode of claim 1, wherein the first coating layer is disposed on the cathode layer.

4. The coated cathode of any of claims 1-3, wherein the coated cathode comprises internal openings that form a tortuous path extending from the surface of the cathode layer, at least a portion of said internal openings along said tortuous path comprising a portion of the first coating layer in contact with the cathode active material and the second coating layer disposed on and in contact with said portion of first coating layer.

5. The coated cathode of any of the preceding claims, wherein the first coating layer is from 0.2 to 1.5 nm and/or wherein the second coating layer is from 0.2 to 1.5 nm.

6. A method of forming a coated cathode comprising the steps of:
1) providing a cathode layer comprising a cathode active material and a first coating layer, wherein the first coating layer comprises a conductive metal oxide and is at least partially disposed on the cathode active material; and
2) depositing a passivating metal oxide on the cathode layer to form a second coating layer by atomic layer deposition, the second coating layer being disposed on at least a portion of the cathode layer so as to be in contact with at least a portion of the first coating layer.

7. The method of claim 6, wherein step 1) comprises the steps of
a) providing a cathode layer comprising a cathode active material; and
b) depositing a conductive metal oxide on the cathode layer to form a first coating layer by atomic layer deposition.

8. The method of claim 6 or claim 7, wherein providing a cathode layer comprises the steps of:
i) providing a cathode active material in the form of discrete particles;
ii) depositing a conductive metal oxide on the cathode active material to form a first coating layer by atomic layer deposition, wherein the depositing forms a coated cathode active material comprising a core of cathode active material and a shell of first coating layer; and
iii) forming a cathode layer from said coated cathode active material.

9. The method of any of claims 6-8, wherein the first coating layer is applied by 1 to 2 cycles of atomic layer deposition and/or wherein the second coating layer is applied by 1 to 2 cycles of atomic layer deposition.

10. The coated cathode of any of claims 1-5 or method of any of claims 6-9, wherein the cathode active material comprises layered lithium metal oxide, preferably wherein the metal comprises nickel.

11. The coated cathode of any of claims 1-5 or 10, or method of any of claims 6-10, wherein the cathode active material comprises a lithium nickel manganese cobalt oxide, preferably represented by the formula Li_{b}Ni_{1-x-y}CoₓMn_{y}A_{z}O₂, where A is an element other than Li, Ni, Co, Mn or O and wherein 0<x+y<0.4, preferably 0<x+y<0.25, and wherein 0≤z≤0.05, preferably 0<z≤0.03, and wherein 0.9≤b≤1.1.

12. The coated cathode of any of claims 1-5, 10 or 11, or method of any of claims 6-11, wherein the first coating layer comprises a metal oxide selected from the group consisting of cerium oxides (CeO₂, Ce₂O₃, Ce₃O₄), niobium oxides (NbO₂, NbO, Nb₂O₅), and ruthenium oxides (RuO₂, RuO₄), and wherein the second coating layer comprises a metal oxide selected from the group consisting of alumina (aluminium oxide, Al₂O₃), zinc oxide (ZnO), magnesium oxide (MgO), titanium dioxide (TiO₂), silicon oxide (SiO₂), and zirconia (zirconium dioxide, ZrO₂).

13. The coated cathode of any of claims 1-5, 10 or 11, or method of any of claims 6-11 wherein the first coating layer comprises a niobium oxide (NbOz, NbO, and/or Nb₂O₅), and the second coating layer comprises aluminium oxide (Al₂O₃).

14. A coated cathode obtained by any of the methods of claims 6-13.

15. A cell, for example a secondary lithium-ion cell, comprising the coated cathode of any of claims 1-5, 10, 11, 12, 13 or 14.
